# FASCICULE DE BREVET EUROPEEN

(11) **EP 0 658 945 B1**
(45) Date de publication et mention de la délivrance du brevet: **12.03.1997**
(21) Numéro de dépôt: 94402881.0
(22) Date de dépôt: 14.12.1994
(51) Int. Cl.: H01M 2/26

(54) **Plaque d'électrode à support de type mousse métallique pour générateur électrochimique, et procédé d'obtention d'une telle électrode**
Elektrodeplatte mit schaumförmigem Träger für elektrochemische Generatoren und Verfahren zur Herstellung einer solchen Elektrode
Electrode plate with spongiform metallic support for electrochemical generator, and process of obtaining such an electrode

(30) Priorité: 17.12.1993 FR 9315254
(43) Date de publication de la demande: 21.06.1995
(73) Titulaire: SAFT, F-93230 Romainville (FR)
(72) Inventeur: Verhoog, Roelof, F-33200 Bordeaux (FR); Precigout, Claude, F-33310 Lormont (FR); Stewart, Donald, F-33000 Bordeaux (FR)
(74) Mandataire: Laroche, Danièle

(56) Documents cités:
- EP-A- 0 418 774
- GB-A- 2 200 068
- PATENT ABSTRACTS OF JAPAN vol. 6 no. 42 (E-98) [920] ,16 Mars 1982 & JP-A-56 159066 (YUASA DENCHI K.K.) 8 Décembre 1981,
- PATENT ABSTRACTS OF JAPAN vol. 8 no. 107 (E-245) [1544] ,19 Mai 1984 & JP-A-59 023471 (SHINKOUBE DENKI K.K.) 6 Février 1984,
- PATENT ABSTRACTS OF JAPAN vol. 11 no. 359 (E-559) [2806] ,21 Novembre 1987 & JP-A-62 133670 (MATSUSHITA ELECTRIC IND CO LTD) 16 Juin 1987,

## Description

La présente invention concerne une plaque d'électrode à support de type mousse métallique pour générateur électrochimique, et un procédé d'obtention d'une telle électrode.

L'invention se rapporte en particulier aux générateurs électrochimiques à électrolyte alcalin dont au moins une électrode comporte un support poreux métallique, par exemple en nickel, chargé de matière active, par exemple à base d'hydroxyde de nickel.

Un tel support poreux présente une structure matricielle comparable à une éponge dont les cellules sont reliées les unes aux autres dans un réseau tridimensionnel et il est désigné par le terme de "mousse".

Avant chargement par la matière active, la porosité de la mousse est supérieure à 90%. L'épaisseur e₁ de la mousse utilisée, dans son état initial est généralement comprise, selon les cas, entre 0,5 et 5 mm.

La liaison d'une plaque d'électrode de ce type à une borne du générateur se fait par la tête de l'électrode qui comprend une zone de connexion formant une sorte de queue. Cette queue de connexion est ensuite liée à la borne du générateur par des moyens divers, tels que vissage, soudure...

La confection de la tête d'électrode avec sa queue de connexion pose des problèmes. En effet, il est nécessaire que cette région soit suffisamment résistante mécaniquement, qu'elle ait une bonne conduction électrique devant drainer tout le courant généré sur toute la surface de l'électrode, ne pas alourdir la plaque et être de confection la plus simple possible et la plus économique possible.

Différentes solutions ont été proposées pour effectuer cette zone de connexion. Il s'agit par exemple d'un rivetage ou d'un agrafage d'une pièce métallique sur la mousse du support ou encore de la compression sur la mousse du support, préalablement chargée de matière active, d'une étroite languette en mousse de même nature non chargée, la languette traversant toute la hauteur du support et dépassant vers le haut pour former une queue de connexion.

La première solution est onéreuse et lourde, et la deuxième est fragile et ne donne pas entièrement satisfaction au point de vue des qualités de conduction électrique de la tête d'électrode et de la queue dépassante.

La présente invention a pour but de proposer une solution assurant une bonne tenue mécanique ainsi qu'une bonne conduction électrique à la tête de plaque et à sa queue de connexion tout en étant de confection relativement simple, économique.

L'invention a ainsi pour objet une plaque d'électrode à support de type mousse métallique pour générateur électrochimique comportant une partie active proprement dite, empâtée de matière active et une tête de plaque, caractérisée en ce que ladite tête de plaque comporte une zone d'épaisseur rétrécie, par rapport à l'épaisseur e₂ de ladite partie active proprement dite, s'étendant sur toute la longueur L de la plaque du côté de son bord supérieur, ladite zone d'épaisseur rétrécie ayant une faible hauteur h₁ sur une certaine longueur de la plaque d'électrode et une plus grande hauteur G sur le reste de la longueur de l'électrode, de façon à former une queue de connexion, ladite zone d'épaisseur rétrécie étant constituée de trois épaisseurs de mousse métallique non empâtées et fortement comprimées les unes contre les autres : la première étant constituée par une zone non empâtée du support et les deux autres, de deux mousses métalliques encadrant la zone non empâtée du support avec une petite hauteur h₂ de recouvrement sur la partie empâtée du support, la zone correspondant à ladite hauteur h₂ de recouvrement ayant la même épaisseur e₂ que le reste de la plaque d'électrode.

L'invention a aussi pour objet un procédé pour la mise en oeuvre de plaques d'électrodes telles que ci-dessus, caractérisé par le fait que l'on part d'un ruban d'un support en mousse métallique de hauteur H et d'épaisseur initiale e₁, et que l'on effectue les opérations suivantes :
- a) On empâte de matière active ledit ruban support sur une hauteur H-G, de façon à conserver à la partie supérieure du ruban une bande de hauteur G non empâtée.
- b) On lamine, ou comprime ledit ruban support de façon à réduire son épaisseur à une valeur e₂ à peu près comprise entre la moitié et les deux tiers de e₁, pour un bon fonctionnement électrochimique de l'électrode.
- c) On appose, de part et d'autre de la bande de hauteur G dudit ruban support, avec une petite hauteur h₂ de recouvrement sur la partie empâtée du ruban support, une bande de hauteur R = G + h₂ de mousse métallique.
- d) On colamine l'ensemble des deux bandes rapportées contre le ruban support de façon à amener cet ensemble à l'épaisseur e₂.
- e) On comprime au maximum, par exemple par laminage, la zone de hauteur G, cette compression comportant une petite zone de transition entre l'écrasement total et l'épaisseur e₂ de la partie de hauteur H-G.
- f) On découpe le ruban de façon à former des plaques d'électrode de longueur L et on effectue une découpe d'une partie de l'extrémité supérieure de chaque plaque de façon à ne laisser qu'une hauteur h₁ au-dessus de la partie non empâtée de l'électrode sur une partie de la longueur de l'électrode, de telle sorte que la partie non découpée forme une queue de connexion de hauteur G au-dessus de ladite partie empâtée.

On va maintenant donner la description d'un exemple de mise en oeuvre de l'invention en se reportant au dessin annexé dans lequel :

Les figures 1 à 6 montrent les différentes étapes du procédé pour l'obtention d'électrodes selon l'invention.

Les figures 7, 8 et 9 montrent respectivement en élévation et en coupe selon VIII-VIII et IX-IX de la figure 7, une plaque d'électrode selon l'invention.

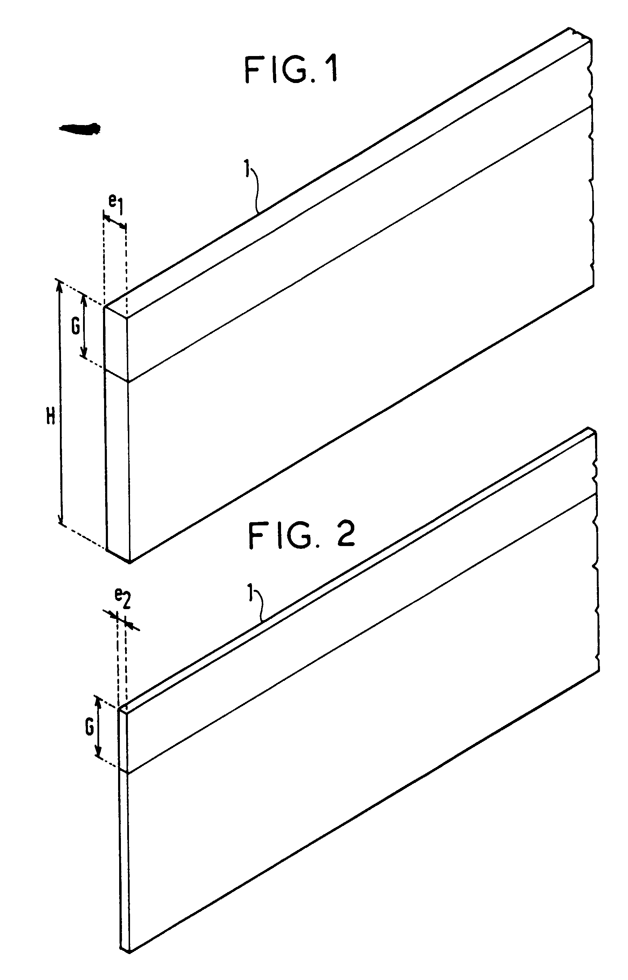

En se reportant à la figure 1, on voit un ruban 1 en mousse de nickel à 95 % de porosité. Ce ruban a une hauteur H et une épaisseur initiale e₁ par exemple de 1,8 mm.

On empâte ce ruban avec de la matière active, par exemple à base d'hydroxyde de nickel, excepté sur une bande de hauteur G à la partie supérieure de ce ruban.

On lamine ensuite le ruban de façon à ce que son épaisseur soit réduite à une valeur e₂ choisie pour un bon fonctionnement électrochimique des électrodes. Pour une valeur initiale de 1,8 mm, la valeur e₂ est d'environ 1 mm (figure 2).

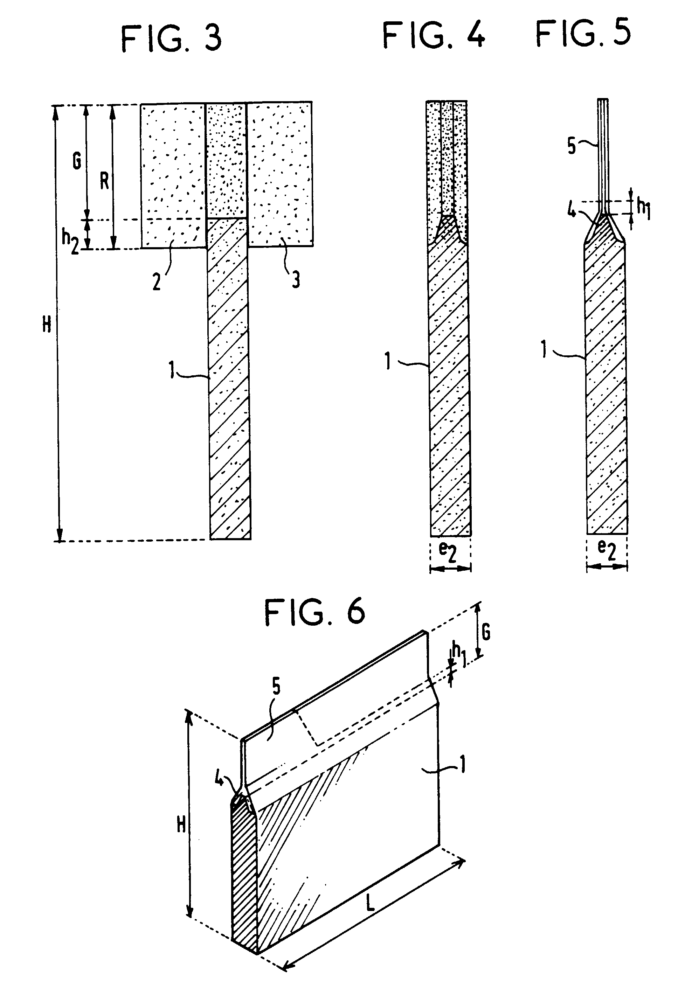

Ensuite, (figure 3) on dispose de chaque côté de la bande G non empâtée du support 1 une bande, respectivement 2 et 3, de mousse de nickel de même porosité et même épaisseur e₁ que le support 1 initial et de hauteur R = G + h₂, la partie h₂ de hauteur de ces bandes recouvrant la partie empâtée du support 1. Cette hauteur h₂ est de l'ordre de 2 mm.

Figure 4, on colamine ensuite cet ensemble de façon à ramener le tout à l'épaisseur e₂. Ainsi, sur la hauteur R du ruban ainsi formé d'épaisseur e₂, la densité, par unité de surface, de mousse de nickel est égale à trois fois celle sur le restant de la hauteur H-R du ruban.

Ensuite, on passe à l'opération de compression maximale, par laminage par exemple, de la zone de hauteur G. On obtient ainsi une bande complètement écrasée (figure 5) avec une porosité la plus proche possible de 0 % et une épaisseur d'environ 0,2 mm. Cette zone comporte une portion transitoire 4 d'épaisseur croissante se raccordant au reste de la bande d'épaisseur e₂.

Enfin, il ne reste plus qu'à découper la bande en plaques d'électrodes de longueur L, figure 6, et à effectuer une découpe, représentée en pointillé sur la figure 6 de façon à ne laisser subsister qu'une queue de connexion 5 de hauteur G à une extrémité de la plaque et qu'une hauteur h₁ d'environ 2 mm au-dessus du niveau de la zone empâtée, sur le reste de la longueur de la plaque.

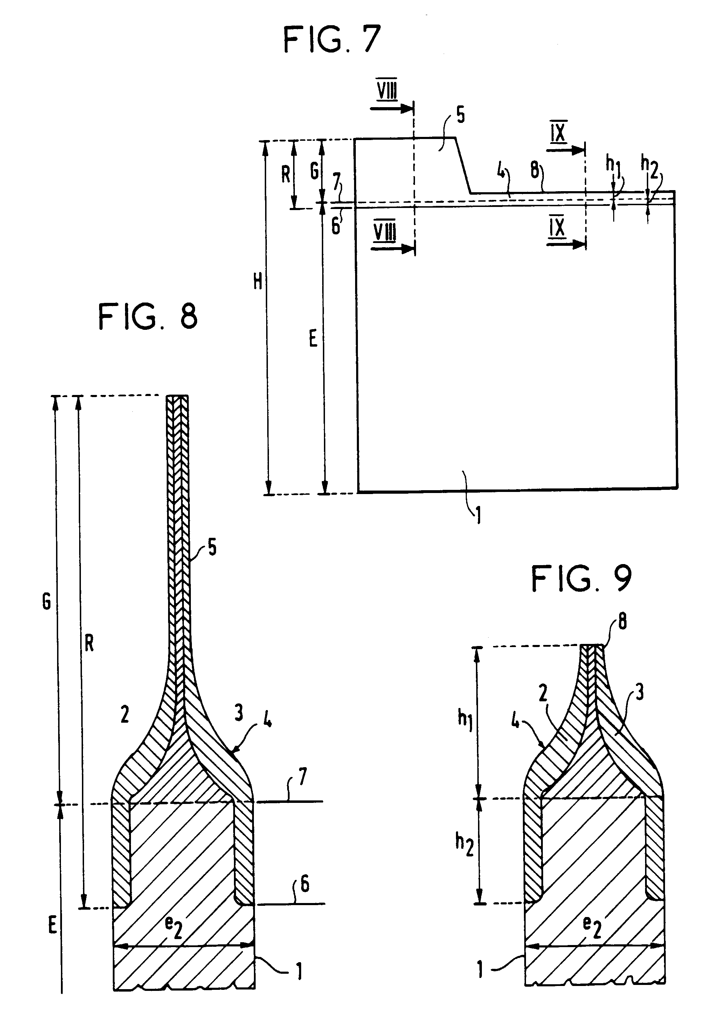

Les figures 7, 8 et 9 illustrent une plaque d'électrode selon l'invention obtenue par le procédé décrit ci-dessus.

La figure 7 est une vue en élévation, la figure 8 est une coupe selon VIII-VIII de la figure 7 et la figure 9 est une coupe selon IX-IX de la figure 7.

Sur ces figures, on voit l'électrode terminée en mousse de nickel, empâtée de matière active sur une hauteur H - G = E, son épaisseur est e₂ ≈ 1 mm, et elle comprend une tête de plaque s'étendant depuis l'extrémité supérieure d'une queue de connexion 5 jusqu'à la ligne repérée 6 sur les figures. Cette tête de plaque a une densité de mousse de nickel triple du reste de l'électrode, et assure ainsi une bonne résistance à la tête de plaque ainsi qu'une bonne conductivité électrique. Cette tête de plaque comporte une zone d'épaisseur rétrécie par rapport à l'épaisseur e₂ du reste de la plaque, au-dessus de la ligne repérée 7 sur les figures et correspondant à la limite supérieure de l'empâtage de la plaque support 1. Cette partie rétrécie a une très faible hauteur h₁ d'environ 2 mm d'un côté de l'électrode et une hauteur plus grande G formant queue de connexion sur le reste de la longueur de l'électrode. La partie rétrécie comporte une zone de transition 4 et une zone complètement écrasée 5 du côté de la queue et 8 de l'autre côté. La partie complètement écrasée, d'une porosité la plus proche possible de 0 % a une épaisseur d'environ 0,2 mm.

La tête de plaque s'étend en outre sur une hauteur h₂ au-dessous de la limite 7 d'empâtage de la plaque 1. Sur cette hauteur h₂, la tête de plaque est de la même épaisseur e₂ que le reste de la plaque.

La tête de plaque est constituée de trois couches, plus ou moins comprimées selon les niveaux dont on vient de parler, de mousse de nickel à l'origine d'épaisseur identique, et la porosité identique : deux bandes latérales 2 et 3 et la plaque support 1.

Les bandes latérales 2 et 3 sont crues, c'est-à-dire non empâtées ainsi que la partie de hauteur G du support 1.

Bien entendu, les dimensions données ne le sont qu'à titre d'exemple. De même, les bandes latérales 2 et 3 peuvent n'être pas constituées par une mousse identique à celle du support 1. En pratique, il est avantageux que la tête de plaque ait une densité, par unité de surface de 2,5 à 4 fois celle du support 1.

Une électrode, telle que proposée, assure à la fois une bonne conduction à la tête de plaque, une bonne résistance mécanique, assure une bonne queue de connexion 5 et est de réalisation simple et économique, et assure en outre une queue de connexion au centre de l'épaisseur de la plaque, ce qui permet d'éviter des courts-circuits avec les plaques de polarité voisines.

## Revendications

1. Plaque d'électrode à support (1) de type mousse métallique pour générateur électrochimique comportant une partie active proprement dite (E) empâtée de matière active et une tête de plaque (R), caractérisée en ce que ladite tête de plaque comporte une zone d'épaisseur rétrécie (4, 5, 8), par rapport à l'épaisseur e₂ de ladite partie active, proprement dite, s'étendant sur toute la longueur L de la plaque du côté de son bord supérieur, ladite zone d'épaisseur rétrécie ayant une faible hauteur h₁ sur une certaine longueur de la plaque d'électrode et une plus grande hauteur G sur le reste de la longueur de l'électrode de façon à former une queue de connexion (5), ladite zone d'épaisseur rétrécie étant constituée de trois épaisseurs de mousse métallique non empâtées et fortement comprimées les unes contre les autres : la première étant constituée par une zone non empâtée du support (1) et les deux autres de deux mousses métalliques (2, 3) rapportées, encadrant la zone non empâtée du support avec une petite hauteur h₂ de recouvrement sur la partie empâtée du support, la zone correspondant à ladite hauteur h₂ de recouvrement ayant la même épaisseur non rétrécie e₂ que le reste de la plaque d'électrode.

2. Procédé pour la mise en oeuvre de plaques d'électrodes selon la revendication 1, caractérisé par le fait que l'on part d'un ruban d'un support (1) en mousse métallique de hauteur H et d'épaisseur initiale e₁ et que l'on effectue les opérations suivantes :
- a) on empâte de matière active ledit ruban support sur une hauteur H-G, de façon à conserver à la partie supérieure du ruban une bande de hauteur G non empâtée,
- b) on lamine, on comprime ledit ruban support de façon à réduire son épaisseur à une valeur e₂ à peu près comprise entre la moitié et les deux tiers de e₁,
- c) on appose de part et d'autre de la bande de hauteur G dudit ruban support, avec une petite hauteur h₂ de recouvrement sur la partie empâtée du ruban support, une bande (2, 3) de hauteur R = G + h₂ de mousse métallique,
- d) on colamine, ou comprime l'ensemble des deux bandes rapportées contre le ruban support de façon à amener cet ensemble à l'épaisseur e₂,
- e) on comprime au maximum, par exemple par laminage, la zone de hauteur G, cette compression comportant une petite zone de transition (4) entre l'écrasement total et l'épaisseur e₂ de la partie de hauteur H-G,
- f) on découpe le ruban de façon à former des plaques d'électrodes de longueur L, et on effectue une découpe d'une partie de l'extrémité supérieure de chaque plaque de façon à ne laisser qu'une hauteur h₁ au-dessus de la partie empâtée de l'électrode sur une partie de la longueur de l'électrode de telle sorte que la partie restante non découpée forme une queue de connexion (5) de hauteur G au-dessus de la partie empâtée.

## Patentansprüche

1. Elektrodenplatte mit einem Träger (1) aus Metallschaum für einen elektrochemischen Generator, wobei die Platte einen eigentlichen aktiven Bereich (E), der mit aktivem Material bestrichen ist, und einen Plattenkopf (R) besitzt, dadurch gekennzeichnet, daß der Plattenkopf eine Zone mit verringerter Dicke (4, 5, 8) im Vergleich zur Dicke e₂ des eigentlichen aktiven Bereichs aufweist, wobei diese Zone sich über die ganze Länge L der Platte an deren oberem Rand erstreckt und eine geringe Höhe h₁ über eine gewisse Länge der Elektrodenplatte sowie eine größere Höhe G über den Rest der Länge der Elektrodenplatte besitzt, so daß sich eine Verbindungsfahne (5) ergibt, wobei die Zone mit verringerter Dicke aus drei nicht mit aktivem Material bestrichenen Schichten von Metallschaum besteht, die stark gegeneinander komprimiert wurden, nämlich einer ersten Schicht, die aus einer nicht mit aktivem Material bestrichenen Zone des Trägers (1) besteht, und zwei weiteren, aufgebrachten Metallschaumschichten (2, 3), die die nicht mit aktivem Material bestrichene Zone des Trägers umgeben und dabei über eine geringe Höhe h₂ auf den mit aktivem Material bestrichenen Bereich des Trägers übergreifen, wobei die Zone entsprechend der Höhe h₂ des Überlappens die gleiche nicht verringerte Dicke e₂ wie der Rest der Elektrodenplatte besitzt.

2. Verfahren zur Herstellung von Elektrodenplatten nach Anspruch 1, dadurch gekennzeichnet, daß man von einem Band eines Trägers (1) aus Metallschaum mit einer Höhe H und einer ursprünglichen Dicke e₁ ausgeht und dann die folgenden Verfahrensschritte durchführt:
a) man bestreicht das Trägerband über eine Höhe H-G mit aktivem Material derart, daß im obersten Bereich des Bands ein Streifen einer Höhe G ohne aktives Material verbleibt,
b) man walzt und komprimiert das Trägerband, so daß sich seine Dicke auf einen Wert e₂ verringert, der etwa zwischen der Hälfte und Zweidrittel von e₁ liegt,
c) man legt auf beide Seiten des Streifens mit der Höhe G des Trägerbands mit einem kleinen Überlappungsbereich h₂ in Richtung des mit aktivem Material bestrichenen Bereichs des Trägerbands ein Band (2, 3) einer Höhe R=G+h₂ aus Metallschaum,
d) man walzt oder komprimiert die Einheit aus dem Trägerband und den beiden um das Trägerband gelegten Bändern, so daß diese Einheit die Dicke e₂ annimmt,
e) man komprimiert maximal, beispielsweise in einer Walze, die Zone der Höhe G, wobei diese Kompression einen kleinen Übergangsbereich (4) zwischen der völlig platten Zone und der Dicke e₂ des Bereiches mit der Höhe H-G ergibt,
f) man zerschneidet das Band und bildet Elektrodenplatten der Länge L, worauf man einen Teil des oberen Endes jeder Platte so abschneidet, daß über einen Teil der Länge der Elektrode nur eine Höhe h₁ oberhalb des mit aktivem Material versehenen Elektrodenbereichs verbleibt, während der restliche, nicht abgeschnittene Teil eine Verbindungsfahne (5) einer Höhe G oberhalb des mit aktivem Material bestrichenen Bereichs bildet.

## Claims

1. An electrode plate for an electrochemical cell and having a metal foam type support (1), the plate comprising a plate head (R) and an active portion proper (E) pasted that is with an active material, the plate being characterized in that said plate head includes a zone (4. 5, 8) of thickness that is reduced relative to the thickness e₂ of said active portion proper and extending along the entire length L of the plate along its top edge, said zone of reduced thickness having a small height h₁ over a fraction of the length of the electrode plate and a greater height G over the remainder of the length of the electrode so as to form a connection tab (5), said zone of reduced thickness being made up of three thicknesses of non-pasted metal foam tightly compressed against one another: the first thickness being constituted by a non-pasted zone of the support (1) and the other two thicknesses being constituted by add-on pieces of metal foam (2, 3) on either side of the non-pasted zone of the support and having a small overlap height h₂ over the pasted portion of the support, the zone corresponding to said overlap height h₂ having the same nonreduced thickness e₂ as the remainder of the electrode plate.

2. A method of implementing electrode plates according to claim 1, characterized by the fact that the following operations are performed starting from a support tape of a metal foam (1) of height H and of initial thickness e₁:
a) active material is pasted on said support tape over a height H-G so as to conserve a non-pasted strip of height G at the top of the tape;
b) said support tape is rolled and compressed so as to reduce its thickness to a value e₂ that lies in the range about half to about two-thirds of e₁;
c) a metal foam strip (2, 3) of height R = G + h₂ is placed on either side of the strip of height G of said support tape, and also over a small overlap height h₂ overlying the pasted portion of said support tape;
d) the assembly comprising the two add-on tapes with the support tape between them is compressed by simultaneous rolling so as to reduce said assembly to the thickness e₂;
e) the zone of height G is maximally compressed, e.g. by rolling, said compression including a small transitional zone (4) between total crushing and the thickness e₂ of the portion of height H-G; and
f) the tape is cut up so as to form electrode plates of length L, and a fraction of the top portion of each electrode plate is cut off so as to leave a height of only h₁ above the pasted portion of the electrode over a fraction of the length of the electrode so that the remaining non-cut off portion forms a connection tab (5) of height G above the pasted portion.
